# EUROPÄISCHE PATENTSCHRIFT

(11) **EP 1 798 104 B1**
(45) Veröffentlichungstag und Bekanntmachung des Hinweises auf die Patenterteilung: **26.11.2014**
(21) Anmeldenummer: 06025785.4
(22) Anmeldetag: 13.12.2006
(51) Int. Cl.: B60P 3/40

(54) **Fahrzeug, Trägereinheit und Verfahren zum Transport eines grossvolumigen Bauteils mit Überlänge**
Vehicle, carrier assembly and method for transporting large scale components with excess length
Véhicule, structure de support et méthode pour le transport d'un élément volumineux de grande longueur

(30) Priorität: 14.12.2005 DE 102005060185
(43) Veröffentlichungstag der Anmeldung: 20.06.2007
(73) Patentinhaber: Senvion SE, 22297 Hamburg (DE)
(72) Erfinder: Trede, Alf, 25885 Immenstadt (DE); von Mutius, Martin, 25885 Ascheffel (DE)
(74) Vertreter: Hausfeld, Norbert

(56) Entgegenhaltungen:
- EP-A- 0 317 891
- WO-A-03/057528
- DE-A1- 2 846 554
- DE-A1- 19 745 923
- JP-A- 2004 243 805
- US-A- 2 720 993
- US-A- 2 752 056
- US-A- 6 050 627

## Beschreibung

Die vorliegende Erfindung betrifft ein Verfahren zum Transport eines Bauteils mit Überlänge gemäß dem Oberbegriff des Anspruchs 1.

Unter einem großvolumigen Bauteil wird ein Bauteil verstanden, das ein großes Volumen aufweist, dessen Masse aber im Verhältnis zu seinem Volumen relativ klein ist, wie z. B. ein Rotorblatt, das um die 300 kg/m oder 100 kg/m³ wiegt.

Der Transport von großvolumigen Bauteilen mit Überlänge, z. B. Rotorblätter einer Windenergieanlage, von einem Ort zu einem anderem stellt aufgrund der Infrastruktur des Transportweges (enge Kurvenläufe, Hindernisse in Form von Bäumen, Gebäuden, Gewässern, Abhängen, Kuppen o.ä.) ein großes Problem dar. Im allgemeinen wird versucht, den Transportweg so zu planen, dass auf dem Weg keines oder so wenig wie möglich der oben genannten Schwierigkeiten liegt. Dies stellt aber einen erheblichen Planungsaufwand dar.

Die US 2,720,993 offenbart ein Fahrzeug für den Transport eines großvolumigen Bauteils mit Überlänge, mit einem Fahrgestell, einer auf dem Fahrgestell montierten Trägereinheit, auf der das Bauteil anordenbar ist, sowie mit einer Hubeinrichtung zur Änderung der Ausrichtung der Längsachse des Bauteils aus einer horizontalen Position in eine geneigte oder vertikale Position, wobei das Fahrzeug zusätzlich eine Dreheinrichtung aufweist, über die die Trägereinheit drehbar auf dem Fahrzeug gelagert ist, zur Änderung der horizontalen Ausrichtung der Längsachse des Bauteils. Die genannte Schrift offenbart, dass die Position des Bauteils während des Beladeprozesses geändert wird. Probleme während des Transportes von Bauteilen mit Überlänge werden von der genannten Schrift nicht angesprochen und auch nicht gelöst.

In analoger Weise beschreibt die US 2,752,056 ein Fahrzeug, bei dem während des Beladeprozesses die Neigung eines Bauteils mit Überlänge veränderbar ist. Auch dieses Dokument beschäftigt sich nicht mit Problemen während des Transportes eines Bauteils mit Überlänge, z.B. Probleme durch Hindernisse aufgrund der Infrastruktur des Transportweges.

Aus der JP 2004243805 A ist ein Verfahren sowie ein Fahrzeug zum Transport überlanger Bauteile, wie zum Beispiel einem Rotorblatt bekannt. Bei dem bekannten Verfahren bzw. dem Fahrzeug befindet sich auf dem Fahrzeug eine Trägereinheit, auf der das Bauteil angeordnet ist. Die Trägereinheit ist so ausgebildet, dass über eine Hubeinrichtung die Ausrichtung des Bauteils aus einer horizontalen Position in eine geneigte oder vertikale Position gebracht werden kann. Auf diese Weise kann die Transportlänge durch Änderung der Neigung verringert werden, wodurch die Möglichkeit geschaffen wird, dass das Fahrzeug mit dem überlangen Bauteil z. B. auch um enge Kurvenläufe fahren kann.

Um die Energieausbeute aus dem Wind zu erhöhen, werden Windenergieanlagen immer größer dimensioniert. Entsprechend nehmen auch die Längen der Rotorblätter zu. Aufgrund der Zunahme der Blattlängen auf inzwischen 50m und mehr stellt der Transport der Rotorblätter trotz des aus dem Stand der Technik bekannten Fahrzeuges und Verfahrens immer noch ein Problem dar.

Die Aufgabe der vorliegenden Erfindung ist ein Verfahren zum Transport von Bauteilen mit Überlänge bereitzustellen, das auch den Transport von Bauteilen mit extremer Überlänge ermöglicht.

Gelöst wird die Aufgabe mit einem Verfahren mit den kennzeichnenden Merkmalen des Anspruchs 1. Es wird ein Verfahren zum Transport eines Bauteils mit Überlänge, insbesondere eines Rotorblattes für eine Windenergieanlage, auf einem Fahrzeug beansprucht, bei dem das Bauteil mit seinem Schwerpunkt im Bereich des Radstandes positioniert wird und die Neigung der Längsachse des Bauteils aus einer horizontalen Position mittels einer Hubeinrichtung und zusätzlich die horizontale Ausrichtung der Längsachse mittels einer Dreheinrichtung über eine Drehachse geändert wird, wobei die Änderung der Neigung und der horizontalen Ausrichtung der Längsachse während des Transports vorgenommen wird, um die Neigung und Ausrichtung der Längsachse des Bauteils den Anforderungen der Infrastruktur des Transportweges anzupassen, wobei die Änderung der Neigung der Längsachse (9) mittels der Hubeinrichtung (10) und einer zweiten Hubeinrichtung (20) vorgenommen wird, die an in Richtung der Längsachse beabstandeten Punkten an dem Bauteil (6) angreifen, und beide das Bauteil (6) in vertikaler Richtung verfahren.

Gemäß einer vorteilhaften Ausgestaltung der Erfindung kann das Bauteil so auf dem Fahrzeug angeordnet werden, dass sich das Fahrzeug über seine gesamte Fahrzeuglänge unterhalb des Bauteils befindet. Zudem kann die horizontale Ausrichtung der Längsachse des Bauteils um eine Drehachse verändert wird, um beim Transport die Ausrichtung des Bauteils den Anforderungen der Infrastruktur des Transportweges anzupassen. Denkbar ist auch, das Bauteil zur Anpassung an die Infrastruktur auch in vertikaler Richtung verschoben werden kann.

Weitere Ausgestaltungen der Erfindung ermöglichen auf vorteilhafte Weise ein einfaches Auf- und Abladen des Bauteils ohne dass dafür z. B. zusätzlich ein Kran notwendig ist. Dazu kann das Bauteil vor dem Aufladen des Fahrzeugs dergestalt erhöht angeordnet werden, dass das Fahrzeug unter das Bauteil fahren kann und über auf dem Fahrzeug vorhandene Hub- und/ oder Dreheinrichtungen auf das Fahrzeug geladen wird. Zum Entladen kann das Fahrzeug an die Abladeposition des Bauteils herangefahren und das Bauteil über auf dem Fahrzeug vorhandene Hub- und/ oder Dreheinrichtungen an der Abladeposition angeordnet werden.

Die erfindungsgemäße Ausgestaltung ist besonders vorteilhaft in Zusammenhang mit einem Rotorblatt. Das Rotorblatt kann bereits beim Hersteller nach der Fertigung auf einem Gestell angeordnet werden, das so ausgebildet ist, dass das Fahrzeug darunter fahren kann. Vorzugsweise fährt das Fahrzeug quer zum Rotorblatt ausgerichtet unter das Rotorblatt. Weiterhin ist es vorteilhaft, das Fahrzeug so zu dem Rotorblatt anzuordnen, dass der Schwerpunkt des Rotorblattes im Bereich des Radstandes des Fahrzeuges liegt. Anschließend wird das Rotorblatt mittels der Hubeinrichtung des Fahrzeuges bzw. der Trägereinheit angehoben, dann wird das Rotorblatt mittels der Dreheinrichtung so gedreht, dass es in seine Transportausrichtung kommt. Abschließend wird das Rotorblatt wieder abgesenkt, so dass das Rotorblatt auf dem Fahrzeug angeordnet ist.

Ähnlich läuft auch der Vorgang zum Abladen des Rotorblattes am Aufstellungsort der Windenergieanlage ab. Bei dem Aufstellungsort wird die Nabe der Windenergieanlage, an der das Rotorblatt montiert werden soll, so aufgestellt, dass das mit dem Rotorblatt beladene Fahrzeug an die Nabe dergestalt heranfahren kann, dass das Rotorblatt mit seinem Anschlußflansch mit Hilfe der Hub- und Dreheinrichtung direkt an den dazugehörigen Anschlußflansch der Nabe zum Anliegen kommt und beide anschließend miteinander verbunden werden können.

Zur Anpassung an die Infrastruktur des Transportweges sowie zum Auf- und Abladen des Bauteils bietet es sich an, dass die Räder des Fahrzeuges verstellbar ausgebildet sind. So ist z. B denkbar, dass die Räder um 90° zu ihrer Ausgangsposition verdreht werden können. Diese Verdrehung ermöglicht eine noch gröβere Flexibilität, da es dann möglich ist, dass das Fahrzeug im sogenannten Hundegang gefahren werden kann, d. h. dass das Fahrzeug seitlich zu seiner Fahrtrichtung bewegt wird.

Ein nach einem erfindungsgemäßen Verfahren arbeitendes Fahrzeug weist z.B. ein Fahrgestell auf sowie eine auf dem Fahrgestell montierte Trägereinheit, auf der das Bauteil anordenbar ist. Weiterhin ist eine Hubeinrichtung vorgesehen zur Änderung der Ausrichtung der Längsachse des Bauteils aus einer horizontalen Position in eine geneigte oder vertikale Position.

Bei dem Fahrzeug ist nach der Anordnung des Bauteils auf der Trägereinheit der Schwerpunkt des Bauteils im Bereich des Radstandes des Fahrzeugs positioniert. Zusätzlich weist das Fahrzeug eine Dreheinrichtung auf, über die die Trägereinheit drehbar auf dem Fahrzeug gelagert ist zur Änderung der horizontalen Ausrichtung der Längsachse des Bauteils gegenüber der Längsachse des Fahrzeugs, so dass das Bauteil während des Transports zur Anpassung an die Infrastruktur des Transportweges über die Hubeinrichtung und/ oder die Dreheinrichtung ausrichtbar ist.

Wie bereits erläutert, ist aus dem Stand der Technik bekannt, dass die Neigung des Bauteils aus einer horizontalen Position verändert werden kann. Dabei wird entsprechend der Schwerpunkt des Bauteils verschoben. Die Schwerpunktverschiebung führt aber dazu, dass das Fahrzeug bei der Änderung der Neigung aus dem Gleichgewicht kommen und umkippen kann. Aus dem Stand der Technik ist es daher weiterhin bekannt zusätzlich eine Ballastiereinrichtung vorzusehen. Der Nachteil dieser zusätzlichen Einrichtung ist jedoch, dass sich das Fahrzeuggewicht erheblich erhöht und Mehrkosten für das Vorsehen einer solchen zusätzlichen Einrichtung anfallen.

Bei der vorliegenden Erfindung wird der Schwerpunkt des Bauteils im Bereich des Radstandes des Fahrzeugs angeordnet. Diese Anordnung bietet ohne eine zusätzliche Ballastiereinrichtung vorsehen zu müssen, den Vorteil, dass eine Ausrichtung des Bauteils während des Transportes möglich ist, ohne das es zu einer Schwerpunktverschiebung kommt, durch die das Fahrzeug aus dem Gleichgewicht kommt und umkippt. Weiterhin kann aufgrund der Anordnung des Schwerpunkts des Bauteils im Bereich des Radstandes des Fahrzeugs, vorteilhaft die horizontale Ausrichtung der Längsachse des Bauteils über eine Dreheinrichtung während des Transports verändert werden.

Bei der Anmelderin ist erkannt worden, dass die Anordnung des Schwerpunkts des Bauteils im Bereich des Radstandes in Verbindung mit einer Hub- und/ oder Dreheinrichtung ermöglicht, ein großvolumiges, überlanges Bauteil während des Transports in den drei Raumrichtungen auszurichten, so dass das Bauteil, wenn die Infrastruktur keinen geraden Straßenverlauf aufweist, dergestalt ausgerichtet werden kann, dass auch enge Kurvenläufe, Hindernisse in Form von Bäumen, Gebäuden etc. befahren bzw. umfahren werden können.

Zu diesem Zweck kann vorteilhaft über die Hub- und/ oder Dreheinrichtung die Ausrichtung der Trägereinheit mit dem darauf angeordneten Bauteil während des Transports relativ zu dem Fahrzeug verändert werden, wobei eine Änderung der Ausrichtung der Trägereinrichtung zum Fahrzeug vorzugsweise dergestalt erfolgt, dass die Position des Schwerpunkts im Bereich des Radstandes des Fahrzeugs verbleibt.

Eine Ausgestaltung der Erfindung sieht vor, dass sich das Fahrzeug über seine gesamte Fahrzeuglänge nach der Anordnung des Bauteils auf der Trägereinheit vollständig unterhalb des Bauteils befindet. Die erfindungsgemäße Ausgestaltung bietet den Vorteil, dass die Transportlänge in der Ausgangsposition des Bauteil nur durch das Bauteil bestimmt wird, das Bauteil muss also nicht extra in eine bestimmte Position gebracht werden, um eine optimale Transportlänge zu erreichen. Auf diese Weise ist keine aufwendige Hubeinrichtung notwendig, sondern eine relativ einfache Hubeinrichtung zur Veränderung der Neigung würde vollkommen ausreichen, wodurch erhebliche Kosten hinsichtlich der Hubeinrichtung gespart werden können.

Gemäß einer weiteren Ausgestaltung kann das Fahrzeug so ausgebildet sein, dass das Bauteil mittels der Dreheinrichtung um 360 Grad geschwenkt werden kann.

Vorteilhaft kann das Fahrzeug auch so ausgebildet sein, dass bei Anordnung des Bauteils auf der Trägereinheit der Schwerpunkt des Bauteils über der Dreheinrichtung positioniert ist. Durch die erfindungsgemäße Ausgestaltung wird vorteilhaft die Belastung des auf der Trägereinheit angeordneten Bauteil reduziert, so dass durch die Gewichtsersparnis, wiederum eine einfachere Dreheinrichtung bzw. eine einfacherer Antrieb verwendet werden kann, wodurch vorteilhaft Kosten eingespart werden können

Hinsichtlich der Kippstabilität des Fahrzeuges mit darauf angeordnetem Bauteil stellt der Transport auf gerader Strecke keine besonderen Anforderungen. Insbesondere dann nicht, wenn das Fahrzeug oder auch das Bauteil eine entsprechende Breite aufweisen. Dies kann sich aber ändern, wenn die horizontale Ausrichtung des Bauteils über die Dreheinrichtung verändert wird und der Schwerpunkt des Bauteils außerhalb des Radstandes bzw. beim Schwenkvorgang außerhalb einer halben Fahrzeugbreite angeordnet ist. Denkbar ist auch, dass das Fahrzeug aufgrund von starken, gegen das großvolumige Bauteil drückendem Windaufkommen aus dem Gleichgewicht gerät. Eine weitere vorteilhafte Ausgestaltung sieht daher vor, dass zur Erhöhung der Kippstabilität des Fahrzeugs mindestens eine Abstützung vorgesehen ist. Diese Abstützung kann gemäß einer weiteren vorteilhaften Ausgestaltung z. B. Mittel zur Reduzierung der Reibkraft zwischen der Abstützung und einer Straße bei einem Fahrvorgang des Fahrzeugs aufweisen, wobei es sich bei den Mitteln z. B. um Räder oder auch Gleitkufen handeln kann.

Gemäß einer weiteren vorteilhaften Ausgestaltung kann das Fahrzeug so ausgebildet sein, dass das Bauteil über die Trägereinheit mittels der Hubeinrichtung in vertikaler Richtung verfahrbar ist. Das heißt, dass das Bauteil nicht nur aus einer horizontalen Position in eine geneigte Position gebracht werden kann, sondern dass zusätzlich auch noch das gesamte Bauteil angehoben werden kann.

Diese Ausgestaltung bietet z. B. den Vorteil, dass bei einer Anordnung des Bauteils dergestalt, dass das Fahrzeug sich vollständig unterhalb des Bauteils befindet und ein relativ großer Anteil des Bauteils noch über die Fahrerkabine hinausragt, das Bauteil in die Höhe gehoben werden kann, wodurch erreicht wird, dass das Bauteil bei Bedarf noch stärker geneigt werden kann, ohne dass der vordere Bereich des Bauteils auf der Straße aufschlägt.

Das Fahrzeug kann dabei so ausgebildet sein, dass die Änderung der Neigung sowie das Anheben des Bauteils mittels einer Hubeinrichtung möglich ist. Gemäß der vorteilhaften Ausgestaltung der Erfindung ist vorgesehen, dass das Bauteil über die Trägereinheit mittels einer zweiten Hubeinrichtung in vertikaler Richtung angehoben wird. Es besteht die Möglichkeit, dass das Bauteil gemeinsam über beide Hubeinrichtungen angehoben wird.

In der Regel werden für Transporte von Bauteilen mit Überlänge Fahrzeuge genutzt, die aufgrund ihrer Überlänge auch entsprechend schwer sind. Die Fahrzeuge müssen daher deutlich mehr als 12 Achsen aufweisen, um die Bauteile zuverlässig transportieren zu können. Solche Fahrzeuge sind entsprechend teuer.

Bei den hier angesprochenen Bauteilen handelt es sich jedoch um großvolumige Bauteile, die im Verhältnis zu ihrer Länge relativ leicht sind, so dass es aufgrund der vorteilhaften erfindungsgemäßen Anordnung des Bauteils auf dem Fahrzeug ausreicht, wenn das Fahrzeug gemäß einer vorteilhaften Ausgestaltung zwischen 3- 12, vorzugsweise nur 4- 8 Achsen aufweist. Diese Ausgestaltung bietet den Vorteil, dass sich die Transportkosten für das Fahrzeug erheblich reduzieren lassen.

Bei einem Transport des Bauteils auf gerader Strecke kann das Fahrzeug mit einer etwas erhöhten Geschwindigkeit gefahren werden. Die erhöhte Geschwindigkeit führt jedoch dazu, dass der über das Fahrzeug hinausragende Endbereich des Bauteils (z. B. die Rotorblattspitze) anfängt zu wippen, wodurch die Stabilität des Transportes erheblich gemindert wird. Eine weitere vorteilhafte Ausgestaltung sieht daher vor, dass an dem Fahrzeug ein Nachläufer montierbar ist, auf dem der über das Fahrzeug hinausragende Endbereich des Bauteils anordenbar ist. Zusätzlich kann der Nachläufer noch sehr schwer ausgebildet sein, so dass ein Wippen des Bauteils unterbunden und der Transport relativ stabil ist.

Eine zur Ausübung des erfindungsgemäßen Verfahrens geeignete Trägereinheit ist z.B. so ausgebildet, dass sie auf Standardfahrzeugen anordenbar ist. Dies bietet den Vorteil, dass lediglich Kosten für die Trägereinheit entstehen, aber kein neues Transportfahrzeug konstruiert werden muss. Unter Standardfahrzeugen werden Fahrzeuge verstanden, die für andere Verwendungszwecke bereits gebaut worden sind, wie z. B. ein Raupenfahrzeug oder der Unterwagen eines Kettenbaggers. Denkbar wäre aber auch der Unterwagen eines Mobilkrans, wie z. B. der Unterwagen LTM 1060/2 des Herstellers Liebherr.

Die Trägereinheit weist ein Verbindungselement zur Verbindung der Trägereinheit mit dem Fahrzeug auf sowie einer Hubeinrichtung zur Änderung der Neigung der Längsachse des Bauteils aus einer im wesentlichen horizontalen Position, wobei die Trägereinheit so ausgebildet ist, dass nach Anordnung der Trägereinheit auf dem Fahrzeug und Anordnung des Bauteils auf der Trägereinheit der Schwerpunkt des Bauteils im Bereich des Radstandes des Fahrzeuges positioniert ist. Zusätzlich ist eine Dreheinrichtung vorgesehen, über die die Trägereinheit um eine im Wesentlichen vertikale Achse drehbar auf dem Fahrzeug gelagert ist, so dass das Bauteil während des Transports an die Infrastruktur des Transportweges ausrichtbar ist.

Gemäß weiterer vorteilhafter Ausgestaltungen ist die Trägereinheit so ausgebildet, dass bei Anordnung des Bauteils auf dem Verbindungselement der Schwerpunkt des Bauteils über der Dreheinrichtung positioniert ist. Gemäß einer weiteren vorteilhaften Ausgestaltungen ist die Trägereinheit so ausgebildet und angeordnet, dass das Bauteil über das Verbindungselement mittels der Hubeinrichtung oder einer weiteren Hubeinrichtung in vertikaler Richtung verfahrbar ist und das Bauteil mittels der Dreheinrichtung um 360 Grad geschwenkt werden kann.

Im Folgenden soll die Erfindung anhand eines Ausführungsbeispiels näher erläutert werden. Es zeigen:
- Fig. 1: die Seitenansicht eines Fahrzeugs aus dem Stand der Technik mit einer Trägereinheit und einem darauf angeordneten Bauteil, wobei das Bauteil in einer horizontalen Position angeordnet ist,
- Fig. 2: die Seitenansicht eines erfindungsgmäßen Fahrzeugs mit einer Trägereinheit und einem darauf angeordneten Bauteil, wobei das Bauteil in einer geneigten Position angeordnet ist und
- Fig 3.: ein Fahrzeug bei einem Abbiegevorgang.

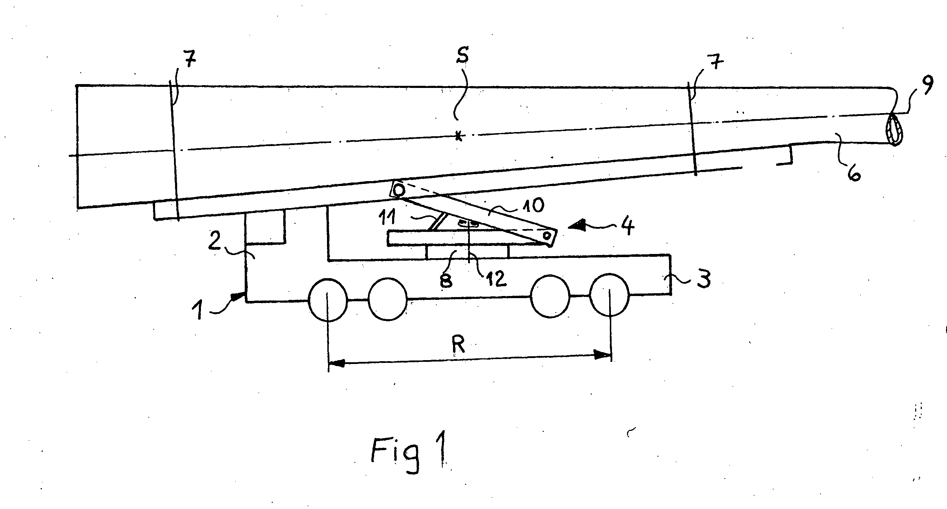

Die Fig. 1 zeigt ein Fahrzeug 1 mit einer Fahrerkabine 2 und einem Fahrgestell 3. Auf dem Fahrgestell 3 ist eine Trägereinheit 4 angeordnet. Die Trägereinheit 4 ist über ein Verbindungselement (nicht dargestellt) auf dem Fahrgestell angeordnet. Auf der Trägereinheit ist ein Rotorblatt 6 angeordnet und mit Befestigungselementen 7 befestigt. Die Trägereinheit 4 weist weiterhin eine Dreheinrichtung 8 auf, über die die Trägereinheit drehbar auf dem Fahrgestell 3 gelagert ist. Zur Änderung der horizontalen Position der Längsachse 9 des Rotorblattes 6 weist die Trägereinheit 4 weiterhin eine Hubeinrichtung 10 mit Hubzylindern 11 auf.

Wie aus der Fig. 1 ersichtlich ist das Rotorblatt 6 dergestalt auf der der Trägereinheit 4 angeordnet, dass das Fahrzeug 1 über seine gesamte Fahrzeuglänge unterhalb des Rotorblattes befindet, so dass die Transportlänge nur durch die Länge des Rotorblattes bestimmt wird.

Weiterhin ist das Rotorblatt 6 so angeordnet, dass sich der Schwerpunkt S des Rotorblattes 6 im Bereich des Radstandes R des Fahrzeugs 1, über der Drehachse 12 der Dreheinrichtung 8 befindet.

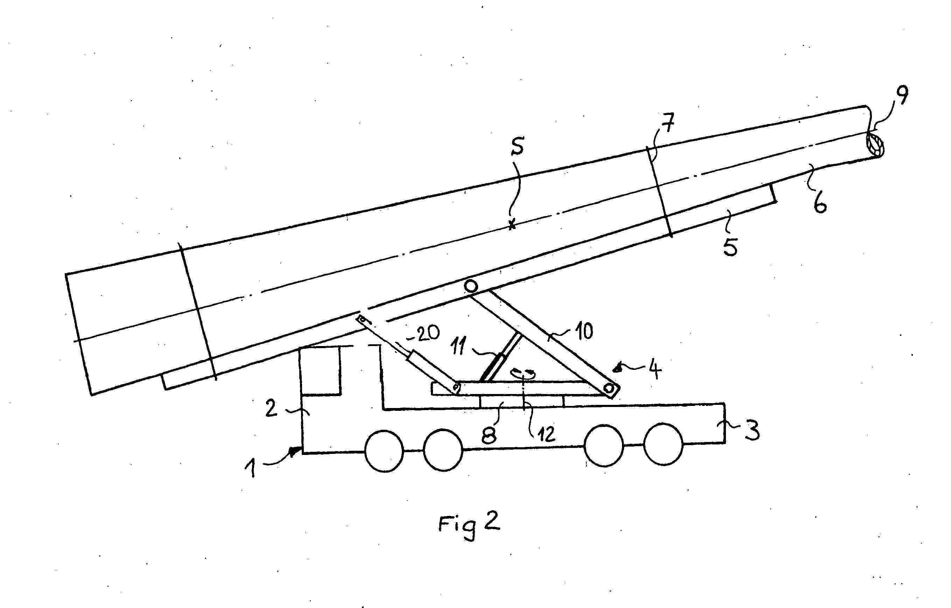

In der Fig. 2 ist das Fahrzeug 1 mit der Trägereinheit 4 und dem darauf angeordneten Rotorblatt 6 dargestellt, wobei die Ausrichtung des Rotorblattes 6 gegenüber der Ausrichtung in Fig. 1 aus einer im wesentlichen horizontalen Position in eine geneigte Position geändert worden ist.

Mit dem Fahrzeug besteht während des Transportes die Möglichkeit die Position des Rotorblattes dergestalt zu verändern, dass sie im wesentlichen an die Infrastruktur des Transportweges angepaßt werden kann.

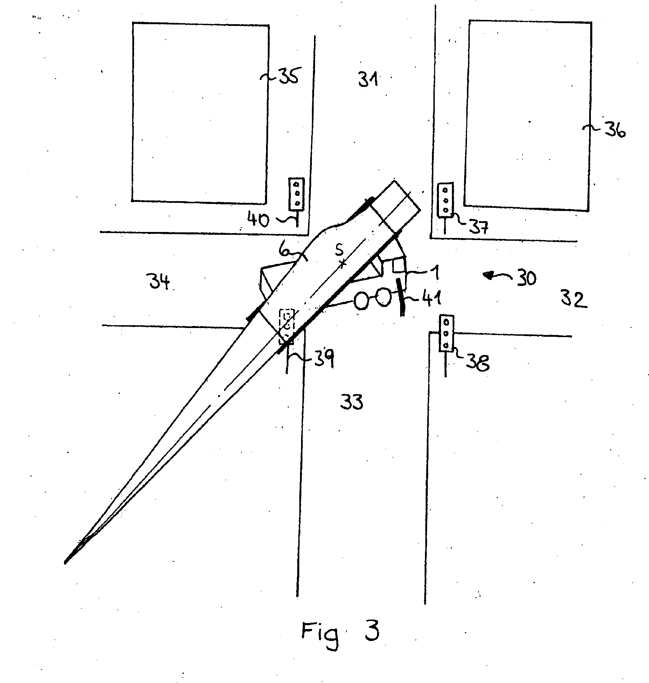

So kann zum Beispiel das Rotorblatt bei einem Abbiegen in eine Kurve über ein gegenüber der Kurve angeordnetes Hindernis, das in dem Schwenkradius des Rotorblattes liegt, durch Ändern der horizontalen Position des Rotorblattes in eine geneigte Position, wie in der Fig 3. dargestellt, geschwenkt werden.

Die Fig. 3 zeigt eine Kreuzung 30 der Strassen 31, 32, 33, 34. Links und rechts neben der Strasse 31 befinden sich zwei Hauser 35, 36. Weiterhin sind an der Kreuzung vier Ampeln 37, 38, 39, 40 angeordnet. Auf der Kreuzung ist das Fahrzeug 1 mit dem darauf angeordneten Rotorblatt 6 dargestellt.

Damit das Fahrzeug 1 abbiegen kann, wurde zunächst das Rotorblatt 6 über die Hubeinrichtung komplett angehoben (hier nicht dargestellt), damit das Rotorblatt 6 beim Abbiegen über die Ampel 39 geschwenkt werden kann. Anschließend wird das Rotorblatt 6 über die Dreheinrichtung so gedreht, dass das Fahrzeug 1 in die Straße 31 einfahren kann. Zur Sicherung der Kippstabilität sind bei dem Abbiegevorgang zusätzlich Abstützungen 41 an dem Fahrzeug angeordnet werden.

Aufgrund der zunehmenden Blattlänge nimmt entsprechend auch der Durchmesser des Rotorblattes, insbesondere des Anschlußflansches zu. Da die Durchfahrtshöhe von Brücken im allgemeinen bei 4,3 m liegt, kann es mit dem Transport Probleme geben, wenn Brücken mit einer zu geringen Durchfahrtshöhe auf dem Transportweg liegen. Dieses Problem kann aufgrund der zur Rotorblattspitze schlanker werdenden Form des Rotorblattes z. B. so gelöst werden, dass das Rotorblatt dergestalt auf dem Fahrzeug angeordnet bzw. abgesenkt wird, dass der Flansch so weit über das Führerhaus hinausragt, dass die Transporthöhe im Bereich des Fahrzeugs nicht höher als die Durchfahrtshöhe der jeweiligen Brücke ist. Dies kann zwar zu einer Sichtversperrung des Fahrers in der Fahrerkabine führen, für diesen Fall können aber zusätzlich Spiegel oder Kameras vorgesehen werden, die den Fahrer bei dem Fahrvorgang unter der Brücke unterstützen. Es wäre auch denkbar, dass das Fahrzeug in einem solchen Fall über eine Fernbedienung gefahren wird.

Sofern die Infrastruktur das zuläßt, kann das Rotorblatt über die Dreheinrichtung auch um 180° gedreht werden, so dass die schlanke Rotorblattspitze in Fahrtrichtung zeigt. Dies ermöglicht ebenfalls, dass das Rotorblatt so auf dem Fahrzeug angeordnet werden kann, dass eine Reduzierung der Transporthöhe erreicht werden kann, um z. B. ein Fahren unter einer Brücke zu ermöglichen.

## Patentansprüche

1. Verfahren zum Transport eines großvolumigen Bauteils (6) mit Überlänge, insbesondere eines Rotorblattes für eine Windenergieanlage, auf einem Fahrzeug (1), bei dem das Bauteil (6) mit seinem Schwerpunkt (S) im Bereich des Radstandes (R) positioniert wird und die Neigung der Längsachse (9) des Bauteils (6) aus einer horizontalen Position mittels einer Hubeinrichtung (10) und zusätzlich die horizontale Ausrichtung der Längsachse mittels einer Dreheinrichtung (8) über eine Drehachse geändert wird, **dadurch gekennzeichnet, dass** die Änderung der Neigung und der horizontalen Ausrichtung der Längsachse während des Transports vorgenommen wird, um die Neigung und Ausrichtung der Längsachse des Bauteils (6) den Anforderungen der Infrastruktur des Transportweges anzupassen, wobei die Änderung der Neigung der Längsachse (9) mittels der Hubeinrichtung (10) und einer zweiten Hubeinrichtung (20) vorgenommen wird, die an in Richtung der Längsachse beabstandeten Punkten an dem Bauteil (6) angreifen, und beide das Bauteil (6) in vertikaler Richtung verfahren.

2. Verfahren nach Anspruch 1, **dadurch gekennzeichnet, dass** das Bauteil (6) mit seinem Schwerpunkt (S) über der Dreheinrichtung (8) positioniert wird.

3. Verfahren gemäß dem vorstehenden Anspruch, **dadurch gekennzeichnet, dass** das Bauteil (6) so auf dem Fahrzeug (1) angeordnet wird, dass sich das Fahrzeug (1) über seine gesamte Fahrzeuglänge unterhalb des Bauteils (6) befindet.

4. Verfahren gemäß einem der vorstehenden Ansprüche, **dadurch gekennzeichnet, dass** das Bauteil (6) vor dem Aufladen auf das Fahrzeug (1) dergestalt erhöht angeordnet wird, dass das Fahrzeug (1) unter das Bauteil (1) fahren kann und über auf dem Fahrzeug (1) vorhandene Hub- und/ oder Dreheinrichtungen (8, 10, 20) auf das Fahrzeug (1) geladen werden kann.

5. Verfahren gemäß einem der vorstehenden Ansprüche, **dadurch gekennzeichnet, dass** zum Abladen des Bauteils (6) von dem Fahrzeug (1) das Fahrzeug (1) an die Abladeposition des Bauteils (6) heranfährt und das Bauteil (6) über auf dem Fahrzeug (1) vorhandene Hub- und/ oder Dreheinrichtungen (8, 10, 20) an der Abladeposition angeordnet wird.

## Claims

1. Method for transporting a large scale component (6) with excess length, in particular a rotor blade for a wind power plant, on a vehicle (1), in the case of which the component (6) is positioned with its center of gravity (S) in the area of the wheel base (R) and the slope of the longitudinal axis (9) of the component (6) is changed from a horizontal position by means of a lifting device (10) and additionally the horizontal orientation of the longitudinal axis is changed by means of a rotating device (8) via an axis of rotation,
**characterized in that**
- the change of the slope and of the horizontal orientation of the longitudinal axis is carried out during the transport, so as to adapt the slope and orientation of the longitudinal axis of the component (6) to the demands of the infrastructure of the transport path, wherein the change of the slope of the longitudinal axis (9) is made by means of the lifting device (10) and by means of a second lifting device (20), which engage with the component (6) at points, which are spaced apart in the direction of the longitudinal axis, and both of which displace the component (6) in vertical direction.

2. The method according to claim 1,
**characterized in that**
- the component (6) is positioned with its center of gravity (S) above the rotating device (8).

3. The method according to the preceding claim,
**characterized in that**
- the component (6) is arranged on the vehicle (1) such that the vehicle (1) is located below the component (6) across its entire vehicle length.

4. The method according to any one of the preceding claims,
**characterized in that**
- prior to being loaded onto the vehicle (1), the component (6) is arranged so as to be elevated such that the vehicle (1) can drive underneath the component (1) and can be loaded onto the vehicle (1) via lifting and/or rotating devices (8, 10, 20), which are present on the vehicle (1).

5. The method according to any one of the preceding claims,
**characterized in that**
- to unload the component (6) from the vehicle (1), the vehicle (1) drives to the unloading position of the component (6) and the component (6) is arranged at the unloading position via lifting and/or rotating devices (8, 10, 20), which are present on the vehicle (1).

## Revendications

1. Méthode pour le transport d'un élément volumineux (6) de grande longueur, notamment d'une pale de rotor pour éolienne, sur un véhicule (1) sur lequel l'élément (6) est positionné avec son centre de gravité (S) dans la zone d'empattement (R), l'inclinaison de l'axe longitudinal (9) de l'élément (6) étant modifiée, à partir d'une position horizontale, au moyen d'un dispositif élévateur (10) et l'orientation horizontale de l'axe longitudinal étant en outre modifiée au moyen d'un dispositif de rotation (8) autour d'un axe de rotation, **caractérisée en ce que** la modification de l'inclinaison et de l'orientation horizontale de l'axe longitudinal est effectuée pendant le transport pour adapter l'inclinaison et l'orientation de l'axe longitudinal de l'élément (6) aux exigences de l'infrastructure de la voie de transport, la modification de l'inclinaison de l'axe longitudinal (9) étant effectuée au moyen du dispositif élévateur (10) et d'un second dispositif élévateur (20), lesquels agissent à des points de l'élément (6) situés à une certaine distance l'un de l'autre dans le sens de l'axe longitudinal, les deux dispositifs élévateurs déplaçant l'élément (6) dans le sens vertical.

2. Méthode selon la revendication 1, **caractérisée en ce que** l'élément (6) est positionné avec son centre de gravité (S) au-dessus du dispositif de rotation (8).

3. Méthode selon la revendication précédente, **caractérisée en ce que** l'élément (6) est placé sur le véhicule (1) de façon telle que le véhicule (1) se trouve sur toute sa longueur sous l'élément (6).

4. Méthode selon l'une des revendications précédentes, **caractérisée en ce que** l'élément (6), avant d'être chargé sur le véhicule (1), est placé en position rehaussée telle que le véhicule (1) puisse rouler sous l'élément (6) et que celui-ci puisse être chargé sur le véhicule (1) au moyen des dispositifs élévateurs et de rotation (8,10,20) agencés sur le véhicule (1).

5. Méthode selon l'une des revendications précédentes, **caractérisée en ce que**, pour décharger l'élément (6) du véhicule (1), le véhicule (1) s'approche de la position de déchargement de l'élément (6), et que l'élément (6) est placé dans sa position de déchargement au moyen des dispositifs élévateurs et de rotation (8, 10, 20) agencés sur le véhicule (1).
